# EUROPÄISCHE PATENTSCHRIFT

(11) **EP 1 110 923 B1**
(45) Veröffentlichungstag und Bekanntmachung des Hinweises auf die Patenterteilung: **13.12.2006**
(21) Anmeldenummer: 00123792.4
(22) Anmeldetag: 02.11.2000
(51) Int. Cl.: C04B 7/43

(54) **Verfahren zur Herstellung von Zementklinker mit Kühlung der Drehofeneinlaufkammer**
Process for producing cement clinker with cooling of the inlet housing of the rotary kiln
Procédé de fabrication de clinker de ciment avec refroidissement de la chambre d'introduction du four rotatif

(30) Priorität: 12.11.1999 DE 19954479
(43) Veröffentlichungstag der Anmeldung: 27.06.2001
(73) Patentinhaber: KHD Humboldt Wedag GmbH, 51170 Köln (DE)
(72) Erfinder: Steffler, Claus-Jürgen, 53797 Lohmar (DE); Meyer, Hans-Wilhelm, Dr., 90579 Langenzenn (DE)

(56) Entgegenhaltungen:
- EP-A- 0 060 152
- WO-A-01/72654
- GB-A- 1 134 305

## Beschreibung

Die Erfindung betrifft ein Verfahren gemäß Anspruch 1 zur Herstellung von Zementklinker aus Rohmehl, das in wenigstens einem vom Abgas eines Drehrohrofens durchströmten Wärmetauscherstrang insbesondere Zyklonschwebegas-Wärmetauschersystem vorerhitzt, ggf. in einer Vorcalcinationsstufe vorcalciniert und in der Sinterzone des Drehrohrofens zu Zementklinker gebrannt wird, der in einem nachgeschalteten Kühler gekühlt wird, wobei in der Vorcalcinationsstufe der Abgasstrom des Drehrohrofens und ein Abluftstrom des Klinkerkühlers getrennt oder gemeinsam zur Vorcalcinierung des Rohmehls genutzt werden.

Um bei Anlagen zur Herstellung von Zementklinker aus Zementrohmehl unwirtschaftlich lange und/oder im Durchmesser große Drehrohröfen zu vermeiden und den spezifischen Wärmebedarf des Zementklinkerherstellungsprozesses niedrig zu halten, ist es bekannt, dem Drehrohrofen materialflußseitig gesehen einen Vorcalcinator vorzuschalten, der mit einer Zweitfeuerung (neben der Feuerung im Drehrohrofen) ausgestattet ist. Bei einem Calcinierungsgrad von 90 bis 95 % beträgt der spezifische Wärmeverbrauch des Vorcalcinators allein schon etwa 550 kcal/kg Zementklinker, d. h. der spezifische Wärmebedarf für den Vorcalcinator zur Durchführung der Calcinierungsreaktion (Entsäuerung des Zementrohmehls) liegt weit höher als der spezifische Wärmebedarf für den nachgeschalteten Drehrohrofen. So wird bei modernen Zementklinkerbrennanlagen mit hochwirksamem Vorcalcinator etwa 65 % des Gesamtbrennstoffs allein im Vorcalcinator verfeuert.

Die Entwicklung von Drehrohröfen für den Zementklinkerbrand geht also dahin, nur noch möglichst kurze Drehrohröfen einzusetzen, die im übrigen nur noch auf zwei Lagerstationen gelagert sind. Kurze Drehrohröfen haben allerdings vergleichsweise hohe Ofenabgastemperaturen von z. B. 1300°C zur Folge, die zu einer hohen thermischen Beanspruchung der Ofeneinlaufkammer führen. Die Reparatur einer beschädigten Ofeneinlaufkammer hätte das Abstellen der gesamten Zementklinkerproduktionslinie zur Folge. Nicht möglich wäre es, die Ofeneinlaufkammer mittels eines Kühlmantels wie z. B. Wassermantels zu kühlen, weil Zementrohmehle zu Verklebungen neigen und schon in der Einlaufkammer des Drehrohrofens an gekühlten Ofeneinlaufkammerwandungen anbacken würden. Dies gilt für alle Zementrohmehle, aber besonders für solche Rohmehle, die Nebenbestandteile wie z. B. Alkaliverbindungen, Chlor, Schwefel, Schwermetalle etc. enthalten.

Der Erfindung liegt die Aufgabe zugrunde, bei Zementklinker-Produktionsanlagen insbesondere mit kurzem Drehrohrofen einen Weg zu finden, wie die thermisch hoch beanspruchte Drehofeneinlaufkammer geschützt und somit die gesamte Produktionsanlage betriebssicher betrieben werden kann.

Diese Aufgabe wird erfindungsgemäß mit einem Verfahren mit den Merkmalen des Anspruchs 1 gelöst. Vorteilhafte Ausgestaltungen der Erfindung sind in den Unteransprüchen angegeben.

Bei der erfindungsgemäßen Produktion von Zementklinker wird ein im Zementklinkerherstellungsprozeß verwertbarer feinkörniger nicht vorerhitzter Stoff, z. B. kaltes nicht vorerhitztes Zementrohmehl unmittelbar in die Drehofeneinlaufkammer eingeführt und dort im Drehofenabgas suspendiert bzw. dispergiert, wodurch das mit einer Temperatur von z. B. 1300°C in die Einlaufkammer einströmende Drehofenabgas schlagartig auf z. B. 1150°C abgekühlt und damit die gesamte Einlaufkammer kontinuierlich gekühlt wird. Durch die Einführung in die Ofeneinlaufkammer erhitzt sich der feinkörnige Stoff dementsprechend schlagartig und er wird mit dem Abgas aus der Ofeneinlaufkammer ausgetragen und dem Prozeßrohmehl zugeschlagen, welches dann nach Durchlaufen der ggf. vorhandenen mit Brennstoff versorgten Vorcalcinierstufe in den Drehrohrofen gelangt.

Der in die Drehofeneinlaufkammer eingeführte und dort im Drehofenabgas dispergierte feinkörnige nicht vorerhitzte Stoff kann gleichzeitig die wenigstens drei folgenden Funktionen erfüllen: Er wirkt als
a) Kühlmedium für die Drehofeneinlaufkammer,
b) Katalysator für eine NOₓ-Reduktionsreaktion zwecks Reduzierung des im heißen Drehofenabgas enthaltenen NOₓ, welches im wesentlichen aus der Hochtemperaturverbrennung im Drehrohrofen herrührt,
c) Kondensationskeime, an welchen im Drehofenabgas enthaltene gas- bzw. dampfförmige Schadstoffe wie insbesondere z. B. Alkalichloride und Alkalisulfate kondensieren (ausfrieren bzw. sublimieren) können.

Insbesondere dann, wenn das Zementrohmehl Nebenbestandteile wie z. B. Alkaliverbindungen, Chlor, Schwefel, Schwermetalle etc. enthält, die im Bereich der Sinterzone des Drehrohrofens z. B. als Alkalichlorid- und Alkalisulfatverbindungen verdampfen und in der Ofeneinlaufkammer auf dem dort eingeführten nicht vorerhitzten feinkörnigen Stoff kondensieren, kann der dispergierte feinkörnige Stoff wenigstens zum Teil über einen eigenen separaten Teilgasabzug aus der Ofeneinlaufkammer ausgetragen werden.

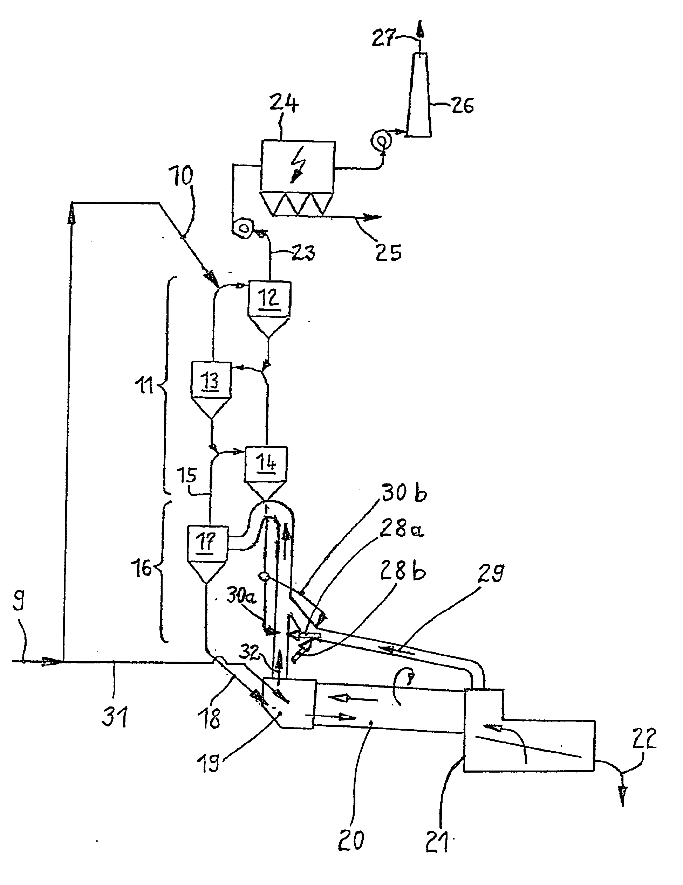

Die Erfindung und deren weitere Merkmale und Vorteile werden anhand des in der Zeichnung schematisch dargestellten Ausführungsbeispieles näher erläutert.

Die Zeichnung zeigt eine Anlage zur Herstellung von Zementklinker aus Zementrohmehl, das bei 10 in die Vorwärmstufe 11 aufgegeben wird, wo es nacheinander die Zyklonschwebegas-Wärmetauscher 12 bis 14 im kombinierten Gleich-/Gegenstrom zum heißen Abgas 15 einer Calcinierstufe 16 durchwandert, um im untersten Zyklon 17 vom heißen Abgasstrom 15 abgetrennt und als hochgradig (z. B. 95 %) calciniertes Zementrohmehl 18 in die Einlaufkammer 19 des Drehrohrofens 20 eingeführt zu werden, in dessen Sinterzone es zu Zementklinker gebrannt wird, der anschließend in einem Klinkerkühler 21, im Ausführungsbeispiel ein Rostkühler, abgekühlt wird. Der abgekühlte Zementklinker verläßt den Klinkerkühler 21 bei 22.

Das am Zementrohmehl abgekühlte Abgas verläßt die Vorwärmstufe 11 der Anlage bei 23. Dieses Abgas 23 wird in einem Staubabscheider, z. B. elektrostatischen Staubabscheider 24 von Staub 25 befreit und anschließend über einen Hauptkamin 26 als Abgas 27 abgezogen.

In der mit Brennstoff 28a, 28b und Tertiärluft 29 des Klinkerkühlers versorgten Calcinierstufe 16 wird das aus der zweituntersten Zyklonstufe 14 austretende vorgewärmte Zementrohmehl 30a, 30b hochgradig calciniert. Dabei wird der Brennstoff 28a in der von der Ofeneinlaufkammer 19 kommenden Ofenabgassteigleitung mit Vorteil unterstöchiometrisch verbrannt zwecks Erzeugung einer CO-haltigen Reduktionszone zur Reduktion des im Drehofenabgas enthaltenen Schadstoffs NOₓ, während der Brennstoff 28b in der vom Klinkerkühler kommenden Tertiärluft 29 mit Vorteil überstöchiometrisch verbrannt wird.

Ein Teilstrom des bei 10 in die Vorwärmstufe 11 aufgegebenen kalten nicht vorerhitzten Zementrohmehls 9 wird über eine mechanische oder pneumatische Förderleitung 31 unmittelbar in die Drehofeneinlaufkammer 19 eingeführt, und zwar im Höhenbereich zwischen der Einlaufschurre für das vorcalcinierte Rohmehl 18 und der Oberseite dieser Ofeneinlaufkammer 19. Durch das über die Leitung 31 in die Ofeineinlaufkammer 19 eingeführte und dort im Drehofenabgas suspendierte bzw. dispergierte kalte feinkörnige Mehl wird das Drehofenabgas, das bei einem relativ kurzen Drehrohrofen 20 eine Austrittstemperatur von z. B. 1300°C ohne weiteres aufweisen kann, schockartig auf eine Temperatur von z. B. 1150°C abgekühlt, wodurch die Ofeneinlaufkammer 19 kontinuierlich gekühlt und vor thermischer Überbeanspruchung geschützt wird. Das über Leitung 31 eingeführte und in der Ofeneinlaufkammer 19 erhitzte feinkörnige Mehl wird dann mit dem Abgas 32 aus der Ofeneinlaufkammer 19 ausgetragen und nach Durchsetzung der Calcinierstufe 16 schließlich dem Prozeßmehl 18 zwecks Weiterleitung in den Drehrohrofen 20 zugeschlagen.

Anstelle eines Teilstroms von kaltem Zementrohmehl 9 oder zusätzlich zu diesem könnte über Leitung 31 auch eine Rohmehlkomponente als ein im Zementklinkerherstellungsprozeß verwertbarer feinkörniger Stoff sowie ggf. auch Ofenfilterstaub 25 aus dem Staubabscheider 24 in die Drehofeneinlaufkammer 19 eingeführt werden.

Bei einer unterstöchiometrischen Verbrennung des in die Ofenabgassteigleitung eingeführten Brennstoffs 28a kann eine CO-haltige Reduktionszone zur Reduktion des im Drehofenabgas enthaltenen NOₓ geschaffen werden. Dann kann das unmittelbar in die Ofeneinlaufkammer 19 über Leitung 31 eingeführte nicht vorerhitzte Rohmehl auch als Katalysator für die NOₓ-Reduktionsreaktion dienen. Sofern das Drehofenabgas gas- bzw. dampfförmige Schadstoffe wie z. B. Alkalichloride und/oder Alkalisulfate enthält, können die über die Leitung 31 unmittelbar in die Ofeneinlaufkammer 19 eingeführten Mehlpartikel auch noch als Kondensationskeime dienen, an denen solche gas- bzw. dampfförmigen Schadstoffe kondensieren. Dann besteht die Möglichkeit, solche mit Schadstoffen beladene Mehlpartikel wenigstens zum Teil über eine eigene separate in der Zeichnung nicht dargestellte Teilgasabzugsleitung aus der Ofeneinlaufkammer 19 auszutragen. Der über einen solchen Teilgasabzug abgezogene Bypassstaub kann je nach seiner Zusammensetzung aus dem System ganz entfernt oder aber auch bei der Klinkermahlung verwertet werden.

## Patentansprüche

1. Verfahren zur Herstellung von Zementklinker aus Rohmehl, das in wenigstens einem vom Abgas eines Drehrohrofens (20) durch-strömten Wärmetauscherstrang insbesondere zyklonschwebegas-Wärmetauschersystem (11) vorerhitzt, in einer mit Brennstoff versorgten Vorcalcinationsstufe (16) vorcalciniert und in der Sinterstufe des Drehrohrofens (20) zu Zementklinker gebrannt wird, der in einem nachgeschalteten Kühler (21) gekühlt wird, wobei in der Vorcalcinationsstufe (16) der Abgasstrom des Drehrohrofens und ein Abluftstrom des Klinkerkühlers getrennt oder gemeinsam zur Vorcalcinierung des Rohmehls genutzt werden,
**gekennzeichnet durch** die Kombination folgender Merkmale:
a) ein im Zementklinkerherstellungsprozess verwertbarer feinkörniger nicht vorerhitzter Stoff (31) wird unmittelbar in die Drehofeneinlaufkammer (19) eingeführt, dort im Drehofenabgas suspensiert bzw. dispergiert und **dadurch** die Ofeneinlaufkammer (19) kontinuierlich gekühlt;
b) danach wird der gemäß a) erhitzte feinkörnige Stoff (31) mit dem Abgas (32) aus der Ofeneinlaufkammer (19) in die Ofenabgassteigleitung ausgetragen und dient dort als Katalysator in der **durch** unterstöchiometrische Brennstoffverbrennung erzeugten CO-haltigen Reduktionszone zur Reduktion des im Drehofenabgas enthaltenen NOx;
c) danach wird der feinkörnige Stoff (31) nach Durchsetzung der Calcinierstufe (16) und nach Zuschlagung zum Prozessmehl über die Rohmehleinlaufschurre (18) in die Ofeneinlaufkammer (19) und von dort in den Drehofen (2) weiter geleitet.

2. Verfahren nach Anspruch 1,
**dadurch gekennzeichnet, dass** der in die Drehofeneinlaufkammer (19) einzuführende feinkörnige Stoff (31) in die Einlaufkammer (19) im Höhenbereich zwischen der Rohmehleinlaufschurre (18) und der Oberseite der Einlaufkammer eingeführt wird.

3. Verfahren nach Anspruch 1,
**dadurch gekennzeichnet, dass** als in die Drehofeneinlaufkammer (19) einzuführender feinkörniger Stoff kaltes nicht vorerhitztes Zementrohmehl (31) und/oder eine Rohmehlkomponente und/oder Ofenfilterstaub (25) verwendet werden.

## Claims

1. Process to manufacture cement clinker from raw meal, which is preheated in at least one through-flow heat exchanger train, in particular a cyclone suspension type heat exchanger system (11), by the waste gas from a cylindrical rotary kiln (20), precalcinated in a precalcination stage (16) supplied with fuel and burnt to cement clinker in the sinter stage of the cylindrical rotary kiln (20), and then cooled in a downstream cooler (21), whereby in the precalcination stage (16) the flow of waste gas from the cylindrical rotary kiln and a flow of exhaust air from the clinker cooler is used separately or together to precalcinate the raw meal, **characterised by** the combination of the following features:
a) a fine-grained, not preheated substance (31) suitable for use in the process of manufacturing the cement clinker is fed directly into the rotary kiln's inlet chamber (19), it is suspended / dispersed there in the waste gas from the rotary kiln and thereby continuously cools the kiln's inlet chamber (19);
b) the heated, fine-grained substance (31) as per a) is then carried out of the kiln's inlet chamber (19) with the waste gas (32) through the kiln's waste gas riser pipe and serves there as a catalyser in the reduction zone containing CO created by under-stoichiometric fuel combustion in order to reduce the NOx contained in the waste gas from the rotary kiln;
c) the fine-grained substance (31) then passes through the calcination stage (16), process meal is added via the raw meal inlet chute (18) and it is fed into the kiln's inlet chamber (19) and from there into the rotary kiln (2).

2. Process as per claim 1,
**characterised in that** the fine-grained substance (31) to be fed into the rotary kiln's inlet chamber (19) is fed into the inlet chamber (19) at a height between the raw meal inlet chute (18) and the top of the inlet chamber.

3. Process as per claim 1,
**characterised in that** cold, not preheated raw cement meal (31) and/or a raw meal constituent and/or filtered kiln dust (25) is used as the fine-grained substance (31) to be fed into the rotary kiln's inlet chamber (19).

## Revendications

1. Processus pour la fabrication de clinkers en farine crue qui est préchauffée dans au moins un échangeur thermique traversé par le gaz résiduel d'échappement d'un four rotatif (20), notamment un système de préchauffage à cyclone par mise en suspension dans les gaz (11), précalcinée dans une phase de précalcination (16) alimentée en combustible et cuite dans la phase de frittage du four rotatif (20) en un clinker, lequel est refroidi dans un refroidisseur placé en aval (21), le flux de gaz résiduel d'échappement du four rotatif et un flux d'air émis par le refroidisseur des clinkers étant utilisés séparément ou ensemble pendant la phase de précalcination (16) pour la précalcination de la farine crue,
**caractérisé par** la combinaison des caractéristiques suivants :
a) une matière à fines particules non préchauffée (31) utilisable dans le processus de fabrication des clinkers est introduite directement dans la chambre d'alimentation du four rotatif (19), mise en suspension ou dispersée dans le gaz d'échappement du four rotatif, la chambre d'alimentation du four (19) étant refroidie en continu;
b) la matière à fines particules (31) chauffé selon a) est ensuite évacuée de la chambre d'alimentation du four rotatif (19) avec le gaz d'échappement (32) dans la conduite montante de gaz d'échappement du four où elle sert de catalyseur dans la zone de réduction contenant du CO générée par la combustion du combustible sous-stoechiométrique, pour la réduction du NOx contenu dans le gaz d'échappement du four rotatif;
c) Une fois la phase de calcination terminée (16) et la transformation en farine de processus, la matière à fines particules (31) est ensuite acheminée par la goulotte d'écoulement de farine crue (18) dans la chambre d'alimentation du four (19) et de là dans le four rotatif (2).

2. Processus selon la revendication 1,
**caractérisé en ce que** la matière à fines particules (31) à introduire dans la chambre d'alimentation du four rotatif(19) est introduite dans la chambre d'alimentation (19) à la hauteur entre la goulotte d'alimentation en farine crue (18) et la partie supérieure de la chambre d'alimentation.

3. Processus selon la revendication 1,
**caractérisé en ce que**, comme matière à fines particules à introduire dans la chambre d'alimentation du four rotatif (19), on utilise de la farine crue froide non préchauffée (31) et/ou une composante de farine crue et/ou de la poussière filtre de four (25).
